# EUROPÄISCHE PATENTSCHRIFT

(11) **EP 2 568 191 B1**
(45) Veröffentlichungstag und Bekanntmachung des Hinweises auf die Patenterteilung: **08.04.2015**
(21) Anmeldenummer: 12182918.8
(22) Anmeldetag: 04.09.2012
(51) Int. Cl.: F16D 21/02, F16D 23/12

(54) **Kupplungsanordnung und Verfahren zu deren Ansteuerung**
Clutch assembly and method for controlling it
Agencement d'embrayage et son procédé de commande

(30) Priorität: 06.09.2011 DE 102011113279
(43) Veröffentlichungstag der Anmeldung: 13.03.2013
(73) Patentinhaber: GETRAG Getriebe- und Zahnradfabrik Hermann Hagenmeyer GmbH & Cie KG, 74199 Untergruppenbach (DE)
(72) Erfinder: Blessing, Uli Christian, 74078 Heilbronn (DE); Rühle, Günter, 74369 Löchgau (DE); Seufert, Martin, 71711 Steinheim (DE)
(74) Vertreter: Witte, Weller & Partner Patentanwälte mbB

(56) Entgegenhaltungen:
- EP-A1- 1 400 715
- DE-A1- 10 316 793
- US-A- 2 991 863

## Beschreibung

Die vorliegende Erfindung betrifft eine Kupplungsanordnung für einen Kraftfahrzeug-Antriebsstrang, wie im Stand der Technik EP1400715 wobei die Kupplungsanordnung eine erste und eine zweite Kupplung aufweist, die als normalerweise offene Kupplungen ausgebildet sind, wobei die erste Kupplung mittels einer ersten Aktuatoranordnung aus einer offenen in eine geschlossene Position betätigbar ist und wobei die zweite Kupplung mittels einer zweiten Aktuatoranordnung aus einer offenen Position in eine geschlossene Position betätigbar ist, und wobei die Kupplungsanordnung eine Arretiereinrichtung zum Arretieren einer Kupplung in der geschlossenen Position aufweist.

Eine derartige Kupplungsanordnung ist aus dem Dokument DE 199 17 724 A1 bekannt. Dieses Dokument offenbart für die zwei Kupplungen jeweils eine eigene Arretiereinrichtung, die zum Einrichten einer Parksperrenfunktion gleichzeitig betätigt werden, um das Getriebe im Stillstand zu blockieren.

Ferner offenbart das Dokument DE 10 2007 023 955 A1 eine Reibkupplung, die mittels einer mechanischen Halteeinrichtung in einer vordefinierten Stellung haltbar ist, von der aus die Kupplung schnell betätigt werden kann.

Kupplungsanordnungen der eingangs genannten Art sind beispielsweise als Trennkupplungsanordnungen in Doppelkupplungsgetrieben verwendbar, wobei die Kupplungsanordnung zwischen einem Antriebsmotor und einem Stufengetriebe mit mehreren Gängen angeordnet ist, und wobei das Stufengetriebe hierbei zwei Teilgetriebe aufweist. Jedem Teilgetriebe sind unterschiedliche Gänge zugeordnet, wobei dem einen Teilgetriebe in der Regel die geraden Gangstufen und dem anderen Teilgetriebe in der Regel die ungeraden Gangstufen zugeordnet sind.

Ferner ist eine Kupplungsanordnung der genannten Art auch für einen Antriebsstrang verwendbar, bei dem der Antriebsmotor durch einen Elektromotor gebildet ist und bei dem das Getriebe nur zwei Gangstufen aufweist. Hierbei dient die Kupplungsanordnung dazu, entweder die eine Gangstufe oder die andere Gangstufe in den Leistungsfluss hin zu einem Differential einer angetriebenen Achse zu schalten.

Die Kupplungen sind vorzugsweise als Reibkupplungen ausgebildet, insbesondere als nasslaufende Lamellenkupplungen. Die Reibkupplungen können jedoch auch als trockene Reibkupplungen ausgebildet sein.

In den beiden oben genannten Anwendungsfällen können die beiden Reibkupplungen überschneidend betätigt werden, um Gangwechsel unter Last durchführen zu können.

Derartige Reibkupplungen werden in der Regel automatisiert mittels Aktuatoranordnungen betätigt. Hierbei sind hohe Sicherheitsanforderungen zu erfüllen, da ein gleichzeitiges Schließen beider Kupplungen zu einer Blockade des Getriebes und damit zu einer Blockade eines angetriebenen Rades führen kann.

Reibkupplungen dieser Art können entweder als normalerweise geschlossene oder als normalerweise geöffnete Reibkupplungen ausgeführt sein. Normalerweise geschlossene Reibkupplungen werden beispielsweise mittels einer mechanischen Federanordnung generell in die geschlossene Position gedrückt und mittels der Aktuatoranordnung geöffnet. Normalerweise offene Reibkupplungen sind beispielsweise mittels einer mechanischen Federanordnung in eine offene Position vorgespannt und werden mittels einer Aktuatoranordnung in die geschlossene Position bewegt.

Normalerweise offene Reibkupplungen sind aus den oben genannten Gründen sicherheitstechnisch weniger problematisch. Allerdings ist es nachteilig, dass die jeweils Leistung führende Reibkupplung während des Betriebs der Kupplungsanordnung mittels der Aktuatoranordnung ständig geschlossen gehalten werden muss (in der Regel gegen eine mechanische Federkraft), was zu einem erhöhten Energieverbrauch führt.

Vor diesem Hintergrund ist es eine Aufgabe der Erfindung, eine verbesserte Kupplungsanordnung für einen Kraftfahrzeug-Antriebsstrang, einen Antriebsstrang mit einer solchen Kupplungsanordnung und ein Verfahren zum Ansteuern einer solchen Kupplungsanordnung anzugeben, wobei sicherheitstechnische Anforderungen relativ leicht erfüllbar sind und wobei dennoch ein hoher Wirkungsgrad beim Betrieb der Kupplungsanordnung erzielbar ist.

Die obige Aufgabe wird bei der eingangs genannten Kupplungsanordnung dadurch gelöst, dass nur die zweite Kupplung mittels der Arretiereinrichtung in der geschlossenen Position arretierbar ist, wohingegen die erste Kupplung in der geschlossenen Position nicht arretierbar ist, so dass die erste Aktuatoranordnung mit Energie versorgt werden muss, um die erste Kupplung in der geschlossenen Position zu halten.

Ferner wird die obige Aufgabe gelöst durch einen Antriebsstrang für ein Kraftfahrzeug, wobei der Antriebsstrang einen Antriebsmotor und ein Stufengetriebe mit mehreren Gangstufen aufweist, das ein erstes und ein zweites Teilgetriebe aufweist, die mittels einer Kupplungsanordnung der oben beschriebenen Art in den Leistungsfluss schaltbar sind und deren Ausgänge mit einer angetriebenen Achse verbunden sind, wobei die erste Kupplung das erste Teilgetriebe in den Leistungsfluss schalten kann und wobei die zweite Kupplung das zweite Teilgetriebe in den Leistungsfluss schalten kann, und wobei die Kupplungen zur Durchführung eines Gangwechsels überschneidend betätigbar sind.

Ferner wird die obige Aufgabe gelöst durch ein Verfahren zum Ansteuern einer Kupplungsanordnung, insbesondere einer Kupplungsanordnung der oben beschriebenen Art, wobei die Kupplungsanordnung eine erste und eine zweite Kupplung aufweist, die als normalerweise offene Kupplungen ausgebildet sind, wobei die erste Kupplung mittels einer ersten Aktuatoranordnung aus einer offenen Position in eine geschlossene Position betätigbar ist, und wobei die zweite Kupplung mittels einer zweiten Aktuatoranordnung aus einer offenen Position in eine geschlossene Position betätigbar ist, und wobei nur die zweite Kupplung mittels einer Arretiereinrichtung in der geschlossenen Position arretierbar ist, wohingegen die erste Kupplung in der geschlossenen Position nicht arretierbar ist, so dass die erste Aktuatoranordnung mit Energie versorgt werden muss, um die erste Kupplung in der geschlossenen Position zu halten.

Bei einem Antriebsstrang, der mit der erfindungsgemäßen Kupplungsanordnung ausgestattet ist, kann ein Fahrbetrieb, bei dem die zweite Kupplung geschlossen ist, im Wesentlichen ohne Energiezufuhr zu der zweiten Aktuatoranordnung durchgeführt werden, da die zweite Kupplung in dem Fahrbetrieb in der geschlossenen Position arretiert werden kann.

Dadurch, dass die erste Kupplung hingegen nicht arretierbar ist, können sicherheitstechnische Anforderungen leichter erfüllt werden.

Die zwei Kupplungen sind vorzugsweise als Reibkupplungen ausgebildet, insbesondere als nasslaufende Lamellenkupplungen. Die Reibkupplungen können jedoch auch als trockene Reibkupplungen ausgebildet sein.

Die Aktuatoranordnungen können jeweils als hydraulische Aktuatoranordnungen mit einer Kolben-/Zylinderanordnung ausgebildet sein. Alternativ hierzu können die Aktuatoranordnungen auch elektromotorisch oder elektromagnetisch ausgebildet sein.

Die Arretiereinrichtung ist vorzugsweise eine mechanische Arretiereinrichtung, wobei die Arretierungsposition eine solche Position ist, in der die zweite Kupplung das maximal zulässige Drehmoment übertragen kann. Die Arretierungsposition ist vorzugsweise eine Selbsthalteposition, die vorzugsweise durch mechanische Federkraft während des Arretierungszustandes gehalten wird. Ferner kann die Arretierungsposition vorzugsweise gehalten werden, ohne dass der zweiten Aktuatoranordnung Energie zuzuführen ist.

Demzufolge kann eine Kupplungsanordnung mit einem hohen Wirkungsgrad realisiert werden. Sicherheitstechnische Aspekte können sich im Wesentlichen auf die Ansteuerung der ersten Kupplung beziehen, und zwar in Abhängigkeit von dem jeweiligen Zustand der zweiten Kupplung (offen, geschlossen oder in der Arretierungsposition).

Die zweite Kupplung kann ohne Einrichten der Arretierungsposition vorzugsweise zwischen der offenen Position und einer geschlossenen Position bewegt werden, in der das maximale Moment übertragbar ist. Daher können Lastschaltungen mit überschneidender Betätigung der zwei Kupplungen ohne Verwendung der Arretierungsfunktion uneingeschränkt durchgeführt werden.

Die erste und die zweite Kupplung können insbesondere zur Verbindung von zwei drehbaren Bauteilen verwendet werden, insbesondere zur Verbindung von zwei Wellen oder zur Verbindung einer Welle mit einem Losrad, das an dieser Welle gelagert ist.

Die Aufgabe wird somit vollkommen gelöst.

Von besonderem Vorzug ist es bei der erfindungsgemäßen Kupplungsanordnung, wenn die Arretiereinrichtung in Wirkrichtung der Aktuatorkraft zwischen der zweiten Aktuatoranordnung und der zweiten Kupplung angeordnet ist.

Hierdurch kann die Arretiereinrichtung unmittelbar auf die zweite Kupplung wirken, auch wenn die zweite Aktuatoranordnung nicht angesteuert wird.

Dabei ist es von besonderem Vorzug, wenn zwischen der Arretiereinrichtung und der zweiten Kupplung eine mechanische Federanordnung angeordnet ist, wie beispielsweise eine Teller- oder Ringfeder.

Durch die mechanische Federanordnung ist es möglich, die zweite Kupplung gegen die Federwirkung von der offenen in die geschlossene Position zu bewegen. Zum anderen ist es durch die Verwendung einer solchen Feder vorzugsweise auch möglich, die Aktuatoranordnung über die geschlossene Position hinaus zu bewegen, wobei die mechanische Federanordnung elastisch verformt wird. Diese Funktion kann beispielsweise zum Einrichten der Arretierungsfunktion verwendet werden.

Ferner kann die mechanische Federanordnung auch dazu dienen, die zweite Reibkupplung generell in die offene Position vorzuspannen, so dass die zweite Kupplung immer geöffnet ist, wenn sie aus der Arretierungsposition ausgerückt ist und wenn von der zweiten Aktuatoranordnung keine Aktuatorkraft ausgeübt wird.

Dabei ist es insbesondere bevorzugt, wenn die zweite Aktuatoranordnung zur Einrichtung der geschlossenen Position der zweiten Kupplung von einer ersten Aktuatorposition in einer Vorwärtsrichtung in eine zweite Aktuatorposition verfahrbar ist, wobei die Arretiereinrichtung so ausgebildet ist, dass die zweite Aktuatoranordnung zur Arretierung der zweiten Kupplung in der Vorwärtsrichtung über die zweite Aktuatorposition hinaus in eine dritte Aktuatorposition verfährt.

Bei dieser dritten Aktuatorposition wird vorzugsweise die mechanische Federanordnung elastisch verformt. Die zweite Kupplung ist dabei sowohl in der zweiten Aktuatorposition als auch in der dritten Aktuatorposition geschlossen. In der dritten Aktuatorposition kann die Arretierungsposition eingerichtet sein. Vorzugsweise dient die dritte Aktuatorposition jedoch nur als eine Zwischenposition zum Einrichten der Arretierungsposition.

Dabei ist es von besonderem Vorzug, wenn die zweite Aktuatoranordnung aus der dritten Position mittels einer Rückstellfeder in einer Rückwärtsrichtung in eine vierte Position zurückgedrückt wird, in der die zweite Aktuatoranordnung mittels einer mechanischen Sperre gegenüber einer weiteren Rückwärtsbewegung gehalten ist.

Die vierte Position ist folglich die Arretierungsposition, in der die zweite Kupplung geschlossen ist und in der von der zweiten Aktuatoranordnung hierzu keine Kraft aufgewendet werden muss.

Die vierte Position kann dabei im Wesentlichen gleich der zweiten Aktuatorposition sein, ist jedoch vorzugsweise in Vorwärtsrichtung der Aktuatorbewegung gesehen hinter der zweiten Aktuatorposition angeordnet, folglich zwischen der zweiten und der dritten Aktuatorposition.

Bei dieser Ausführungsform ist es ferner vorteilhaft, wenn die zweite Aktuatoranordnung zum Lösen der Arretierung der zweiten Kupplung zunächst - wieder - in die Vorwärtsrichtung bewegt wird.

Hierbei wird die Arretierung gelöst, indem die zweite Aktuatoranordnung wiederum in Vorwärtsrichtung bewegt wird, so dass ein Lösen der mechanischen Sperre vereinfacht wird.

Alternativ zu der obigen Ausführungsform kann die Arretiereinrichtung auch einfach eine Arretierposition einrichten (bspw. mittels eines federvorgespannten Stiftes, der in eine Nut eines Andruckteiles der Arretiereinrichtung drückt), aus der ein Zurückkehren (in Rückwärtsrichtung) auch möglich ist, ohne zunächst wieder eine Bewegung in die Vorwärtsrichtung einzuleiten.

Bei dem erfindungsgemäßen Antriebsstrang ist es von Vorteil, wenn das zweite Teilgetriebe, dem die zweite Kupplung zugeordnet ist, jene Gangstufe aufweist, die im Fahrbetrieb des Fahrzeugs am häufigsten verwendet wird.

Hierdurch kann die Arretiereinrichtung für einen hohen Anteil des Fahrbetriebes verwendet werden, so dass ein hoher Wirkungsgrad des Antriebsstranges erzielbar ist.

Dabei ist es von besonderem Vorteil, wenn die am häufigsten verwendete Gangstufe die höchste Gangstufe ist.

Bei einem Kraftfahrzeug mit einem Doppelkupplungsgetriebe kann die zweite Kupplung folglich jenem Teilgetriebe zugeordnet sein, das die höchste Gangstufe aufweist (bei einem 7-Gang-Getriebe folglich die Gangstufe 7, bei einem 6-Gang-Schaltgetriebe folglich die Gangstufe 6, etc.).

Besonders bevorzugt ist es, wenn der Antriebsmotor ein Elektromotor ist, wobei jedes der zwei Teilgetriebe genau eine Vorwärtsgangstufe aufweist und wobei die höhere Vorwärtsgangstufe durch das zweite Teilgetriebe eingerichtet wird.

Bei einem derartigen Antriebsstrang, der beispielsweise für ein reines Elektrofahrzeug verwendbar ist oder für ein Hybrid-Fahrzeug, dessen Antriebsstrang als Range-Extender ausgeführt ist, dient die zweite Gangstufe für den weit überwiegenden Anteil des Fahrbetriebes. Die erste Gangstufe wird hier in der Regel ausschließlich bei sportlichen Beschleunigungen oder bei großen Steigungen eingesetzt.

Daher kann bei dieser Art von Antriebsstrang durch die erfindungsgemäße Kupplungsanordnung ein besonders hoher Wirkungsgrad erzielt werden.

Bei dem erfindungsgemäßen Verfahren ist es von Vorteil, wenn zumindest dann, wenn die zweite Kupplung in der geschlossenen Position arretiert ist, die erste Kupplung daraufhin überwacht wird, ob die erste Kupplung in Schließrichtung bewegt oder angesteuert wird, und wobei eine sicherheitstechnische Maßnahme eingeleitet wird, wenn die erste Kupplung in Schließrichtung bewegt oder angesteuert wird.

Wenn die zweite Kupplung in der Arretierungsposition ist, darf aus sicherheitstechnischen Gründen die erste Kupplung nicht geschlossen werden, da ansonsten Verspannungszustände in dem Antriebsstrang auftreten können.

Falls demzufolge erfasst wird, dass die erste Kupplung in Schließrichtung bewegt oder angesteuert wird, kann eine sicherheitstechnische Maßnahme eingeleitet werden, wie beispielsweise ein "Reset" eines Steuergerätes oder dergleichen, was in der Regel automatisch dazu führt, dass die erste Aktuatoranordnung nicht mehr mit Energie versorgt wird, so dass die erste Kupplung automatisch öffnet (aufgrund ihrer Charakteristik als "normalerweise geöffnete" bzw. "normally open" Kupplung.

Bei dem erfindungsgemäßen Verfahren ist es ferner vorteilhaft, wenn die zwei Kupplungen bei einem Gangwechsel überschneidend betätigt werden.

Hierdurch können Gangwechsel unter Last ohne Zugkraftunterbrechung durchgeführt werden.

Dabei ist es von Vorteil, wenn überwacht wird, ob die zweite Kupplung während der überschneidenden Betätigung von erster und zweiter Kupplung aufgrund eines Fehlers in Richtung der Arretierungsposition bewegt wird, wobei eine sicherheitstechnische Maßnahme eingeleitet wird, bevor die zweite Kupplung in der geschlossenen Position arretiert würde.

Mit anderen Worten wird überwacht, ob die zweite Kupplung über die geschlossene Position hinaus bewegt wird, ob mit anderen Worten die Aktuatoranordnung über die zweite Aktuatorposition hinaus in eine dritte Aktuatorposition verfahren wird.

Sobald dies der Fall ist, kann wiederum eine sicherheitstechnische Maßnahme eingeleitet werden, die vorzugsweise beinhaltet, dass ein Steuergerät einen "Reset" erfährt. Hierdurch wird die erste Kupplung geöffnet, und/oder es wird verhindert, dass die zweite Kupplung in die Arretierungsposition verfährt.

Dabei ist es von besonderem Vorteil, wenn der Verstellweg der zweiten Kupplung von einer Position, in der die zweite Kupplung geschlossen ist (entsprechend der zweiten Aktuatorposition), bis zu einer Position, von der aus die zweite Kupplung selbsttätig in die Arretierungsposition gedrückt werden kann (entsprechend der dritten Aktuatorposition), oder bis zu der Arretierungsposition selbst, so lang ausgebildet ist, dass während der entsprechenden Verstellzeit die sicherheitstechnische Maßnahme eingeleitet werden kann.

Hierbei wird durch Auslegung des Verstellweges unter Berücksichtigung der möglichen Verstellgeschwindigkeiten der zweiten Kupplung der Verstellweg zwischen diesen beiden Positionen so gewählt, dass auf jeden Fall eine sicherheitstechnische Maßnahme eingeleitet werden kann, bevor die zweite Kupplung automatisch in die Arretierungsposition gerät.

Hierdurch kann verhindert werden, dass die zweite Kupplung bei einer überschneidenden Betätigung der zwei Kupplungen fehlerhaft schließt und in die Arretierungsposition gerät.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung einer ersten Ausführungsform eines erfindungsgemäßen Antriebsstranges;
- Fig. 2: eine schematische Darstellung einer zweiten Ausführungsform eines erfindungsgemäßen Antriebsstranges;
- Fig. 3: ein Diagramm von Druck über Weg einer zweiten Aktuatoranordnung der zweiten Kupplung einer erfindungsgemäßen Kupplungsanordnung beim Schließen der Kupplung und Einrichten einer Arretierungsposition;
- Fig. 4: ein der Fig. 3 entsprechendes Diagramm zur Darstellung des Ausrückens aus einer Arretierungsposition;
- Fig. 5: eine schematische Längsschnittansicht durch eine Kupplungsanordnung;
- Fig. 6: eine Schnittansicht entlang der Linie VI-VI der Fig. 5;
- Fig. 7: eine der Fig. 6 vergleichbare Ansicht einer alternativen Ausführungsform; und
- Fig. 8: eine alternative Ausführungsform einer Arretiereinrichtung.

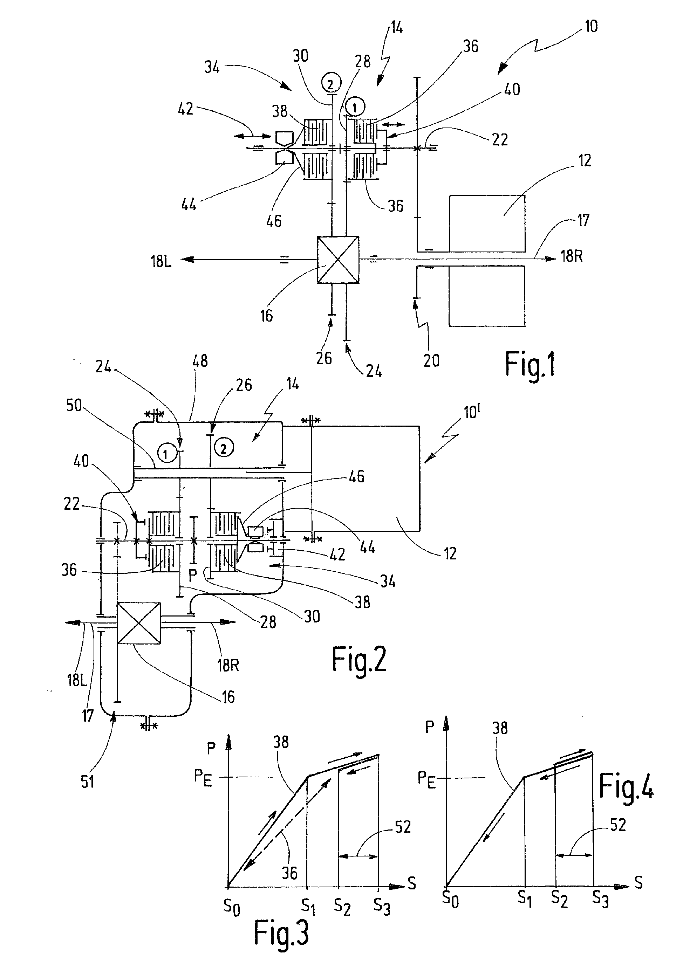

Eine erste Ausführungsform eines erfindungsgemäßen Antriebsstranges ist in Fig. 1 generell mit 10 bezeichnet.

Der Antriebsstrang 10 beinhaltet einen Antriebsmotor 12 in Form eines Elektromotors. Ferner weist der Antriebsstrang 10 ein Getriebe 14 auf, das vorliegend als 2-Gang-Getriebe ausgebildet ist. Das Getriebe 14 ist lastschaltbar.

Ein Ausgang des Getriebes ist mit einem Differential 16 verbunden, das Antriebsleistung auf zwei Antriebswellen 18L, 18R einer angetriebenen Achse 17 eines Kraftfahrzeuges verteilt. Das Differential 16 kann ein mechanisches Differential (Kegelraddifferential etc.) sein, kann jedoch auch ein durch zwei Reibkupplungen gebildetes Differential sein.

Der Motor 12 ist koaxial zu einer der Antriebswellen (hier 18R) angeordnet und weist eine als Hohlwelle ausgebildete Motorwelle auf. Die Motorwelle

Die Zwischenwelle 22 bildet eine Eingangswelle für das Getriebe 14. Das Getriebe 14 weist ein erstes Teilgetriebe in Form eines ersten Gangradsatzes 24 und ein zweites Teilgetriebe in Form eines zweiten Gangradsatzes 26 auf. Der erste Gangradsatz 24 weist ein erstes Losrad 28 auf, das drehbar an der Zwischenwelle 22 gelagert ist. In entsprechender Weise weist der zweite Gangradsatz 26 ein zweites Losrad 30 auf, das drehbar an der Zwischenwelle 22 gelagert ist. Mit den Lösrädern 28, 30 in Eingriff stehende Festräder sind mit einem Eingangsglied des Differentials 16 verbunden.

Der Antriebsstrang 10 beinhaltet ferner eine Kupplungsanordnung 34 mit einer ersten Reibkupplung 36 und einer zweiten Reibkupplung 38.

Die erste Reibkupplung 36 dient dazu, den ersten Gangradsatz 24 in den Leistungsfluss zu schalten. Die zweite Kupplung 38 dient dazu, den zweiten Gangradsatz 26 in den Leistungsfluss zu schalten. Die Kupplungen 36, 38 sind jeweils dazu ausgelegt, das ihnen zugeordnete Losrad 28, 30 entweder von der Zwischenwelle 22 zu trennen oder mit dieser zu verbinden.

Die Kupplungen 36, 38 sind als Lastschaltkupplungen ausgebildet, im vorliegenden Fall als nasslaufende Lamellenkupplungen. Die jeweiligen Eingangsglieder der Kupplungen 36, 38 sind fest mit der Zwischenwelle 22 verbunden. Die Ausgangsglieder der Kupplungen 36, 38 sind mit den jeweiligen Losrädern 38, 30 verbunden.

Zur Betätigung der ersten Kupplung 36 dient eine erste Aktuatoranordnung 40. Zur Betätigung der zweiten Kupplung 38 dient eine zweite Aktuatoranordnung 42. Die Aktuatoranordnungen 40, 42 sind unabhängig voneinander ansteuerbar. Insbesondere ist es möglich, die Kupplungen mittels der Aktuatoranordnungen 40, 42 überschneidend zu betätigen, um auf diese Weise Gangwechsel unter Last und ohne Zugkraftunterbrechung durchführen zu können.

Die zwei Kupplungen 36, 38 sind jeweils als normalerweise offene ("normally open") Kupplungen ausgebildet. Das heißt, die Kupplungen 36, 38 sind beispielsweise in ihre Offenposition vorgespannt. Erst durch Energiezufuhr zu den jeweiligen Aktuatoranordnungen 40, 42 und das Aufbringen einer Axialkraft auf die Kupplungen 36, 38 können diese Drehmomente übertragen. Wenn die Aktuatoranordnungen 40, 42 stromlos geschaltet werden, öffnen sich die Kupplungen 36, 38 in der Regel selbsttätig. Die zweite Kupplung 38 ist der zweiten Gangstufe 2 des Getriebes 14 zugeordnet, folglich jener Gangstufe, die im Fahrbetrieb des Kraftfahrzeuges überwiegend verwendet wird.

Im vorliegenden Fall ist der zweiten Kupplung 38 eine Arretiereinrichtung 44 zugeordnet, die in Fig. 1 schematisch angedeutet ist. Hierdurch ist es möglich, die zweite Kupplung 38 in einer Drehmoment übertragenden Position zu arretieren, derart, dass die zweite Aktuatoranordnung 42 stromlos geschaltet werden kann. Die Arretiereinrichtung 44 ist dabei vorzugsweise selbsthaltend ausgebildet.

Hierdurch ist es möglich, im Fahrbetrieb, bei dem überwiegend die zweite Gangstufe 2 eingelegt ist, diese mittels der Arretiereinrichtung 44 eingelegt zu halten, ohne die zugeordnete zweite Aktuatoranordnung 42 ständig mit Energie versorgen zu müssen.

Die erste Kupplung 36 weist hingegen keine Arretiereinrichtung auf, so dass dann, wenn der ersten Aktuatoranordnung 40 keine Energie zugeführt wird, sich die erste Kupplung 36 immer selbsttätig öffnet.

Genauer gesagt ist die Arretiereinrichtung 44 zwischen der zweiten Aktuatoranordnung 42 und der zweiten Kupplung 38 vorgesehen. Ferner ist zwischen der Arretiereinrichtung 44 und der zweiten Kupplung 38 eine mechanische Federanordnung 46 angeordnet. Die Federanordnung 46 kann dazu ausgelegt sein, die zweite Kupplung 38 in Öffnungsrichtung vorzuspannen. Ferner ist die Federanordnung 46 so angeordnet und ausgelegt, dass die zweite Aktuatoranordnung 42 gegenüber einer geschlossenen Position der zweiten Kupplung 38 noch weiter überdrückt werden kann, um die Arretierungsposition der Aktuatoranordnung 42 bzw. der zweiten Kupplung 38 einzurichten, wie es nachstehend noch beschrieben werden wird.

In Fig. 2 ist eine alternative Ausführungsform eines Antriebsstranges 10' dargestellt. Dieser entspricht hinsichtlich Aufbau und Funktionsweise generell dem Antriebsstrang 10 der Fig. 1. Gleiche Elemente sind daher durch gleiche Bezugszeichen gekennzeichnet. Im Folgenden werden im Wesentlichen die Unterschiede erläutert.

Bei dem Antriebsstrang 10' ist ein Antriebsmotor 12 in Form eines Elektromotors von außen an ein Gehäuse 48 des Getriebes 14 angeflanscht. Dabei erstreckt sich eine Motorwelle in das Getriebegehäuse 48 hinein und ist mit einer in dem Getriebegehäuse 48 drehbar gelagerten Eingangswelle 50 drehfest verbunden, die als Hohlwelle ausgebildet ist.

Die zwei Gangradsätze 24, 26 weisen jeweils ein Festrad auf, das mit der Eingangswelle 50 verbunden ist.

Ferner ist die Zwischenwelle 22 parallel zu der Eingangswelle 50 angeordnet. An der Zwischenwelle 22 sind die Losräder 28, 30 drehbar gelagert. In entsprechender Weise sind die zwei Kupplungen 36, 38 konzentrisch zu der Zwischenwelle 22 angeordnet und mittels der Aktuatoranordnungen 40, 42 betätigbar.

Zwischen den zwei Losrädern 28, 30 ist eine Parksperrenanordnung P an der Zwischenwelle 22 angeordnet.

Ferner ist an jenem Ende der Zwischenwelle 22, das dem Antriebsmotor 12 abgewandt ist, ein Abtriebskonstantenradsatz 51 ("final drive") angeordnet, der ein mit der Zwischenwelle 22 verbundenes Festrad und ein mit einem Eingangsglied des Differentials 16 verbundenes Rad beinhaltet.

Die Funktion des Antriebsstranges 10' ist, bis auf die geänderten Übersetzungen, identisch zu jener des Antriebsstranges 10 der Fig. 1.

In Fig. 3 ist ein Diagramm von Druck P über Weg s gezeigt, in dem die Kennlinien der ersten Kupplung 36 und der zweiten Kupplung 38 bzw. der zugeordneten Aktuatoranordnungen 40, 42 eingetragen sind. Es ist zu erkennen, dass ausgehend von einem Weg s₀, bei dem die Kupplungen in der offenen Stellung sind (P = 0), die erste Kupplung 36 bis zu einem Weg s₂ (oder bis zu einem Weg s₁) bewegbar ist, bei dem ein Druck P_{E} vorherrscht, bei dem die erste Kupplung 36 geschlossen ist. Die Kennlinie verläuft dabei im Wesentlichen linear und gilt sowohl für das Öffnen als auch für das Schließen der ersten Reibkupplung 36.

Die für die zweite Kupplung 38 eingerichtete Kennlinie ist in durchgezogenen Linien gezeigt und beinhaltet einen linearen Abschnitt von dem Ausgangspunkt s₀ zu einem ersten Wert s₁, ab dem die zweite Kupplung geschlossen ist und/oder ihr maximales Moment übertragen kann (geschlossene Position). Bei Lastschaltungen mit überschneidender Betätigung der ersten Kupplung 36 und der zweiten Kupplung 38 wird die zweite Kupplung 38 im Wesentlichen innerhalb dieses Kennlinienabschnittes bewegt.

Sofern durch eine übergeordnete Steuerung festgestellt worden ist, dass die zweite Gangstufe dauerhaft eingelegt werden soll, wird die zweite Aktuatoranordnung 42 in Vorwärtsrichtung über den Weg s₁ hinaus bewegt, und zwar bis zu s₃. Anschließend wird die Kupplung vorzugsweise durch die Kraft der Federanordnung 46 selbsttätig zurückgedrückt, und zwar in eine Position s₂, die vorzugsweise zwischen den zwei Positionen s₁ und s₃ liegt. In dieser Position ist die zweite Aktuatoranordnung 42 bzw. die zweite Kupplung 38 arretiert.

Die Wegstrecke von s₂ bis s₃ wird als Überdrückungsbereich 52 bezeichnet.

Zum Lösen der Arretierung (Fig. 4) wird die zweite Aktuatoranordnung 42 wiederum aktiviert, so dass die Aktuatoranordnung 42 ausgehend von der Arretierungsposition s₂ wieder in die Überdrückungsposition s₃ verfahren wird, von der aus die Aktuatoranordnung 42 dann zurück zunächst in die Position s₁ und dann in die Position s₀ gelangt.

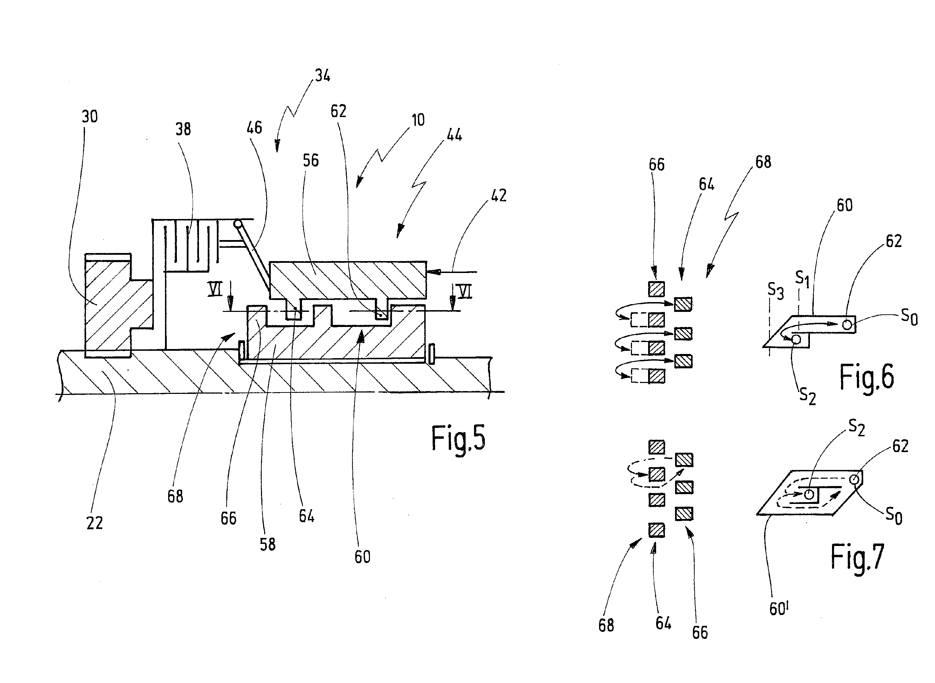

In Fig. 5 ist in schematischer Form ein Ausführungsbeispiel einer Kupplungsanordnung 34 des Antriebsstranges 10 ausschnittsweise dargestellt, wobei gleiche Elemente wie bei der Ausführungsform der Fig. 1 mit den gleichen Bezugszeichen versehen sind.

Die Arretiereinrichtung 44 weist ein in axialer Richtung bewegliches Andruckteil 56 auf, das zwischen der zweiten Aktuatoranordnung 42 und der Federanordnung 46 angeordnet ist.

Die Arretiereinrichtung 44 beinhaltet ferner ein Kulissenteil 58, das in axialer Richtung im Wesentlichen unverschieblich an der Zwischenwelle 22 gelagert ist, jedoch drehbeweglich gegenüber der Zwischenwelle 22.

Das Kulissenteil 58 weist eine Kulissenführung 60 auf, in die ein Mitnehmer wie ein Stift 62 des Andruckteiles 56 ragt.

Ferner beinhaltet das Andruckteil 56 eine erste Verzahnung 64, und das Kulissenteil 58 beinhaltet eine zweite Verzahnung 66, die eine mechanische Sperre einrichten können.

Die mechanische Sperre 68 und die Kulissenführung 60 sind in Fig. 6 näher dargestellt. Die Kulissenführung 60 ist in der Draufsicht etwa L-förmig und beinhaltet einen ersten Führungskanal, innerhalb dessen der Stift 62 von der Position s₀ zur Position s₁ bewegbar ist. Der erste Führungskanal ist axial ausgerichtet. Ferner beinhaltet die Kulissenführung 60 einen zweiten Führungskanal, innerhalb dessen der Stift 62 von der Position s₃ zur Position s₂ bewegbar ist. Auch der zweite Führungskanal ist im Wesentlichen axial ausgerichtet. Die zwei Führungskanäle sind über einen im Wesentlichen radial, vorzugsweise schräg ausgerichteten weiteren Führungskanal miteinander verbunden, um den Führungsstift von der Position s₁ zur Position s₃ zu bewegen. Hierbei verdrehen sich das Andruckteil 56 und das Kulissenteil 58.

Die mechanische Sperre 68 ist so ausgebildet, dass beim Verschieben des Stiftes 62 von s₀ nach s₁ die erste Verzahnung 64 axial durch die zweite Verzahnung 66 hindurchgeführt wird. Durch die Relativverdrehung von s₁ nach s₃ gelangt die erste Verzahnung 64 in Ausrichtung mit der zweiten Verzahnung 66, so dass in der Position s₂ die erste Verzahnung 64 in axialer Richtung an der zweiten Verzahnung 66 anliegt, wodurch die Arretierungsposition eingerichtet wird. Dies ist in Fig. 6 auf der linken Seite gestrichelt dargestellt. In dieser Position kann die zweite Aktuatoranordnung 42 stromlos geschaltet werden, so dass die erste Verzahnung 64 durch die Federanordnung 46 gegen die zweite Verzahnung 66 gedrückt wird. Zum Lösen der Arretierungsposition wird die zweite Aktuatoranordnung 42 wieder gegen die Kraft der Federanordnung 46 ausgelenkt, so dass der Stift 62 von der Position s₂ zur Position s₃ gelangt und von da aus zur Position s₁ und s₀ gelangen kann. Hierzu können das Andruckteil 56 und das Kulissenteil 58 in Umfangsrichtung gegeneinander vorgespannt sein.

In Fig. 7 ist eine alternative Ausführungsform einer derartigen Kulissenführung bei 60' dargestellt. Die Kulissenführung 60' ist als herzförmige Kulisse ausgebildet und weist einen ersten Führungsabschnitt auf, innerhalb dessen der Stift 62 von der Position s₀ zur Position s₂ geführt wird, sowie einen zweiten - separaten-Führungsabschnitt, innerhalb dessen der Stift 62 von der Arretierungsposition s₂ zurück zur Position s₀ geführt wird.

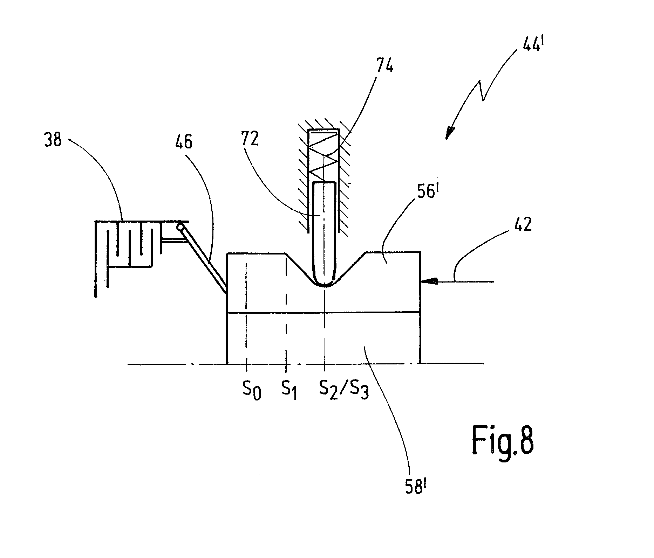

Eine weitere Ausführungsform einer Arretiereinrichtung 60' ist in Fig. 8 gezeigt. Bei dieser wirkt eine Aktuatorkraft der zweiten Aktuatoranordnung 42' auf ein Andruckteil 56', das wie bei den obigen Ausführungsformen über eine Federanordnung mit der zweiten Kupplung 38 gekoppelt ist.

Das Andruckteil 56' ist an einem Führungsteil 58' linear geführt, das jedoch nicht notwendigerweise eine Kulissenführung aufweisen muss. Am Außenumfang weist das Andruckteil eine radiale Arretiernut 70 auf, in die ein Arretierstift 72 greifen kann, der an einem nicht näher bezeichneten Gehäuse in Radialrichtung verschieblich geführt ist. Dabei drückt eine Arretierfeder 74 den Arretierstift 72 gegen das Andruckteil 56'.

In Fig. 8 sind ferner die Positionen s₀, s₁ und s₂ sowie s₃ eingetragen, deren Funktionen jenen der obigen Ausführungsform entsprechen. Ausgehend von s₀ ist über s₁ in Vorwärtsrichtung in der Position s₂/s₃ die Arretierposition erreicht. Diese Position ist erreichbar, ohne ein Überdrücken durchführen zu müssen wie bei der Ausführungsform der Fig. 5 - 7. Entsprechend kann die Arretierposition s₂/s₃ gelöst werden, ohne dass zuvor ein Bewegen in Vorwärtsrichtung erforderlich ist.

## Patentansprüche

1. Kupplungsanordnung (34) für einen Kraftfahrzeug-Antriebsstrang (10), wobei die Kupplungsanordnung (34) eine erste und eine zweite Kupplung (36, 38) aufweist, die als normalerweise offene Kupplungen ausgebildet sind, wobei die erste Kupplung (36) mittels einer ersten Aktuatoranordnung (40) aus einer offenen Position in eine geschlossene Position betätigbar ist und wobei die zweite Kupplung (38) mittels einer zweiten Aktuatoranordnung (42) aus einer offenen Position in eine geschlossene Position betätigbar ist, und wobei die Kupplungsanordnung (34) eine Arretiereinrichtung (44) zum Arretieren einer Kupplung in der geschlossenen Position aufweist,
**dadurch gekennzeichnet, dass**
nur die zweite Kupplung (38) mittels der Arretiereinrichtung (44) in der geschlossenen Position arretierbar ist, wohingegen die erste Kupplung (36) in der geschlossenen Position nicht arretierbar ist, so dass die erste Aktuatoranordnung (40) mit Energie versorgt werden muss, um die erste Kupplung (36) in der geschlossenen Position zu halten.

2. Kupplungsanordnung nach Anspruch 1, **dadurch gekennzeichnet, dass** die Arretiereinrichtung (44) in Wirkrichtung der Aktuatorkraft zwischen der zweiten Aktuatoranordnung (42) und der zweiten Kupplung (38) angeordnet ist.

3. Kupplungsanordnung nach Anspruch 2, **dadurch gekennzeichnet, dass** zwischen der Arretiereinrichtung (44) und der zweiten Kupplung (38) eine mechanische Federanordnung (46) angeordnet ist.

4. Kupplungsanordnung nach einem der Ansprüche 1 bis 3, **dadurch** gekennzeichnet, dass die zweite Aktuatoranordnung (42) zur Einrichtung der geschlossenen Position der zweiten Kupplung (38) von einer ersten Aktuatorposition (s₀) in einer Vorwärtsrichtung in eine zweite Aktuatorposition (s₁) verfahrbar ist, wobei die Arretiereinrichtung (44) so ausgebildet ist, dass die zweite Aktuatoranordnung (42) zur Arretierung der zweiten Kupplung (38) in der Vorwärtsrichtung über die zweite Aktuatorposition (s₁) hinaus in eine dritte Aktuatorposition (s₃) verfährt.

5. Kupplungsanordnung nach Anspruch 4, **dadurch gekennzeichnet, dass** die Aktuatoranordnung (42) aus der dritten Position (s₃) mittels einer Rückstellfeder in einer Rückwärtsrichtung in eine vierte Position (s₂) zurückgedrückt wird, in der die zweite Aktuatoranordnung (42) mittels einer mechanischen Sperre (68) gegenüber einer weiteren Rückwärtsbewegung gehalten ist.

6. Kupplungsanordnung nach Anspruch 5, **dadurch gekennzeichnet, dass** die Arretierungseinrichtung (44) so ausgebildet ist, dass die zweite Aktuatoranordnung (42) zum Lösen der Arretierung der zweiten Kupplung (38) zunächst in der Vorwärtsrichtung bewegt wird.

7. Antriebsstrang (10) für ein Kraftfahrzeug, wobei der Antriebsstrang (10) einen Antriebsmotor (12) und ein Stufengetriebe (14) mit mehreren Gangstufen aufweist, das ein erstes und eine zweites Teilgetriebe aufweist, die mittels einer Kupplungsanordnung (34) nach einem der Ansprüche 1 bis 6 in den Leistungsfluss schaltbar sind und deren Ausgänge mit einer angetriebenen Achse (17) verbunden sind, wobei die erste Kupplung (36) das erste Teilgetriebe (24) in den Leistungsfluss schalten kann und wobei die zweite Kupplung (38) das zweite Teilgetriebe (26) in den Leistungsfluss schalten kann, und wobei die Kupplungen (36, 38) zur Durchführung eines Gangwechsels überschneidend betätigbar sind.

8. Antriebsstrang nach Anspruch 7, wobei das zweite Teilgetriebe (26), dem die zweite Kupplung (38) zugeordnet ist, jene Gangstufe (2) aufweist, die im Fahrbetrieb des Fahrzeugs am häufigsten verwendet wird.

9. Antriebsstrang nach Anspruch 8, wobei die am häufigsten verwendete Gangstufe (2) die höchste Gangstufe ist.

10. Antriebsstrang nach einem der Ansprüche 7 bis 9, wobei der Antriebsmotor (12) ein Elektromotor ist, wobei jedes der zwei Teilgetriebe (24, 26) genau eine Vorwärtsgangstufe aufweist und wobei die höhere Vorwärtsgangstufe (2) durch das zweite Teilgetriebe (26) eingerichtet wird.

11. Verfahren zum Ansteuern einer Kupplungsanordnung (34), insbesondere einer Kupplungsanordnung (34) nach einem der Ansprüche 1 bis 6, wobei die Kupplungsanordnung (34) eine erste und eine zweite Kupplung (36, 38) aufweist, die als normalerweise offene Kupplungen ausgebildet sind, wobei die erste Kupplung (36) mittels einer ersten Aktuatoranordnung (40) aus einer offenen Position in eine geschlossene Position (s₂) betätigbar ist und wobei die zweite Kupplung (38) mittels einer zweiten Aktuatoranordnung (42) aus einer offenen Position in eine geschlossene Position betätigbar ist, und wobei nur die zweite Kupplung (38) mittels einer Arretiereinrichtung (44) in der geschlossenen Position arretierbar ist, wohingegen die erste Kupplung (36) in der geschlossenen Position nicht arretierbar ist, so dass die erste Aktuatoranordnung (40) mit Energie versorgt werden muss, um die erste Kupplung (36) in der geschlossenen Position zu halten.

12. Verfahren nach Anspruch 11, wobei zumindest dann, wenn die zweite Kupplung (38) in der Arretierungsposition arretiert ist, die erste Kupplung (36) daraufhin überwacht wird, ob die erste Kupplung (36) in Schließrichtung bewegt oder angesteuert wird, und wobei eine sicherheitstechnische Maßnahme eingeleitet wird, wenn die erste Kupplung (36) in Schließrichtung bewegt oder angesteuert wird.

13. Verfahren nach Anspruch 11 oder 12, wobei die zwei Kupplungen (36, 38) bei einem Gangwechsel überschneidend betätigt werden.

14. Verfahren nach Anspruch 13, wobei überwacht wird, ob die zweite Kupplung (38) während der überschneidenden Betätigung von erster und zweiter Kupplung (36, 38) aufgrund eines Fehlers in Richtung der Arretierungsposition bewegt wird, und wobei eine sicherheitstechnische Maßnahme eingeleitet wird, bevor die zweite Kupplung (38) in der geschlossenen Position arretiert würde.

15. Verfahren nach Anspruch 14, wobei der Verstellweg der zweiten Kupplung (38) von einer Position, in der die zweite Kupplung (38) geschlossen ist, bis zu einer Position, von der aus die zweite Kupplung (38) in die Arretierungsposition selbsttätig gedrückt werden kann, oder bis zu der Arretierungsposition, so lang ausgebildet ist, dass während der entsprechenden Verstellzeit die sicherheitstechnische Maßnahme eingeleitet werden kann.

## Claims

1. Clutch arrangement (34) for a motor vehicle drive train (10), wherein the clutch arrangement (34) has a first and a second clutch (36, 38) which are embodied as normally open clutches, wherein the first clutch (36) can be activated from an open position into a closed position by means of a first actuator arrangement (40), and wherein the second clutch (38) can be activated from an open position into a closed position by means of a second actuator arrangement (42), and wherein the clutch arrangement (34) has a locking device (44) for locking a clutch in the closed position,
**characterized in that**
only the second clutch (38) can be locked in the closed position by means of the locking device (44), while the first clutch (36) cannot be locked in the closed position, with the result that the first actuator arrangement (40) has to be supplied with energy in order to secure the first clutch (36) in the closed position.

2. Clutch arrangement according to Claim 1, **characterized in that** the locking device (44) is arranged in the direction of action of the actuator force between the second actuator arrangement (42) and the second clutch (38).

3. Clutch arrangement according to Claim 2, **characterized in that** a mechanical spring arrangement (46) is arranged between the locking device (44) and the second clutch (38).

4. Clutch arrangement according to one of Claims 1 to 3, **characterized in that** in order to bring about the closed position of the second clutch (38) the second actuator arrangement (42) can be moved from a first actuator position (s₀) in a forward direction into a second actuator position (s₁), wherein the locking device (44) is embodied in such a way that in order to lock the second clutch (38) the second actuator arrangement (42) moves in the forward direction beyond the second actuator position (s₁) into a third actuator position (s₃).

5. Clutch arrangement according to Claim 4, **characterized in that** the actuator arrangement (42) is pressed back, by means of a restoring spring, from the third position (s₃) in a reverse direction into a fourth position (s₂) in which the second actuator arrangement (42) is secured with respect to a further reverse movement by means of a mechanical blocking device (68).

6. Clutch arrangement according to Claim 5, **characterized in that** the locking device (44) is embodied in such a way that in order to release the locking of the second clutch (38) the second actuator arrangement (42) is firstly moved in the forward direction.

7. Drive train (10) for a motor vehicle, wherein the drive train (10) has a drive engine (12) and a step-by-step variable speed transmission (14) which has a plurality of gearspeed stages and a first and a second component transmission which, by means of a clutch arrangement (34) according to one of Claims 1 to 6, can be shifted into the power flux and whose outputs are connected to a driven axle (17), wherein the first clutch (36) can shift the first component transmission (24) into the power flux, and wherein the second clutch (38) can shift the second component transmission (26) into the power flux, and wherein the clutches (36, 38) can be activated in an overlapping fashion in order to carry out a gearspeed change.

8. Drive train according to Claim 7, wherein the second component transmission (26), to which the second clutch (38) is assigned, has that gearspeed stage (2) which is used most frequently in the driving mode of the vehicle.

9. Drive train according to Claim 8, wherein the gearspeed stage (2) which is used most frequently is the highest gearspeed stage.

10. Drive train according to one of Claims 7 to 9, wherein the drive engine (12) is an electric motor, wherein each of the two component transmissions (24, 26) has precisely one forward gearspeed stage, and wherein the higher forward gearspeed stage (2) is set by the second component transmission (26).

11. Method for actuating a clutch arrangement (34), in particular a clutch arrangement (34) according to one of Claims 1 to 6, wherein the clutch arrangement (34) has a first and a second clutch (36, 38) which are embodied as normally open clutches, wherein the first clutch (36) can be activated from an open position into a closed position (s₂) by means of a first actuator arrangement (40), and wherein the second clutch (38) can be activated from an open position into a closed position by means of a second actuator arrangement (42), and wherein only the second clutch (38) can be locked in the closed position by means of a locking device (44), while the first clutch (36) cannot be locked in the closed position, with the result that the first actuator arrangement (40) has to be supplied with energy in order to secure the first clutch (36) in the closed position.

12. Method according to Claim 11, wherein at least when the second clutch (38) is locked in the locked position, the first clutch (36) is monitored to determine whether the first clutch (36) is moved or actuated in the closing direction, and wherein a technical safety measure is initiated if the first clutch (36) is moved or actuated in the closing direction.

13. Method according to Claim 11 or 12, wherein the two clutches (36, 38) are activated in an overlapping fashion when a gearspeed change occurs.

14. Method according to Claim 13, wherein it is monitored whether during the overlapping activation the second clutch (38) is moved in the direction of the locked position by the first and second clutches (36, 38) owing to a fault, and wherein a technical safety measure is initiated before the second clutch (38) has been locked in the closed position.

15. Method according to Claim 14, wherein the adjustment travel of the second clutch (38) from a position in which the second clutch (38) is closed to a position from which the second clutch (38) can be pressed automatically into the locked position or to the locked position, is made long enough that the technical safety measure can be initiated during the corresponding adjustment time.

## Revendications

1. Agencement d'embrayage (34) pour une chaîne cinématique de véhicule automobile (10), l'agencement d'embrayage (34) comprenant un premier et un deuxième embrayage (36, 38), lesquels sont réalisés sous la forme d'embrayages normalement ouverts, le premier embrayage (36) pouvant être actionné au moyen d'un premier agencement d'actionneur (40) à partir d'une position ouverte jusqu'à une position fermée, et le deuxième embrayage (38) pouvant être actionné au moyen d'un deuxième agencement d'actionneur (42) à partir d'une position ouverte jusqu'à une position fermée, et l'agencement d'embrayage (34) comprenant un dispositif de blocage (44) pour bloquer un embrayage dans la position fermée,
**caractérisé en ce que**
seulement le deuxième embrayage (38) peut être bloqué dans la position fermée au moyen du dispositif de blocage (44), tandis que le premier embrayage (36) ne peut pas être bloqué dans la position fermée, de sorte que le premier agencement d'actionneur (40) doit être alimenté en énergie afin de maintenir le premier embrayage (36) dans la position fermée.

2. Agencement d'embrayage selon la revendication 1, **caractérisé en ce que** le dispositif de blocage (44) est disposé entre le deuxième agencement d'actionneur (42) et le deuxième embrayage (38) dans la direction d'action de la force d'actionneur.

3. Agencement d'embrayage selon la revendication 2, **caractérisé en ce qu'**un agencement de ressort mécanique (46) est disposé entre le dispositif de blocage (44) et le deuxième embrayage (38).

4. Agencement d'embrayage selon l'une quelconque des revendications 1 à 3, **caractérisé en ce que**, pour ajuster la position fermée du deuxième embrayage (38), le deuxième agencement d'actionneur (42) peut être déplacé à partir d'une première position d'actionneur (s₀) jusqu'à une deuxième position d'actionneur (s₁) dans un sens vers l'avant, le dispositif de blocage (44) étant réalisé de telle sorte que, pour bloquer le deuxième embrayage (38), le deuxième agencement d'actionneur (42) se déplace dans le sens vers l'avant au-delà de la deuxième position d'actionneur (s₁) jusqu'à une troisième position d'actionneur (s₃).

5. Agencement d'embrayage selon la revendication 4, **caractérisé en ce que** l'agencement d'actionneur (42) est repoussé dans un sens vers l'arrière jusqu'à une quatrième position (s₂) à partir de la troisième position (s₃) au moyen d'un ressort de rappel, dans laquelle quatrième position le deuxième agencement d'actionneur (42) est maintenu par rapport à un mouvement vers l'arrière supplémentaire au moyen d'un dispositif de verrouillage mécanique (68).

6. Agencement d'embrayage selon la revendication 5, **caractérisé en ce que** le dispositif de blocage (44) est réalisé de telle sorte que le deuxième agencement d'actionneur (42) soit déplacé tout d'abord dans le sens vers l'avant pour desserrer le blocage du deuxième embrayage (38).

7. Chaîne cinématique (10) pour un véhicule automobile, la chaîne cinématique (10) comprenant un moteur d'entraînement (12) et une boîte de vitesses étagée (14) comprenant plusieurs rapports de vitesse, laquelle comprend une première et une deuxième boîte de vitesses partielle, lesquelles peuvent être commutées dans le flux de puissance au moyen d'un agencement d'embrayage (34) selon l'une quelconque des revendications 1 à 6 et dont les sorties sont reliées à un essieu entraîné (17), le premier embrayage (36) pouvant commuter la première boîte de vitesses partielle (24) dans le flux de puissance, et le deuxième embrayage (38) pouvant commuter la deuxième boîte de vitesses partielle (26) dans le flux de puissance, et les embrayages (36, 38) pouvant être actionnés en coïncidence pour effectuer un changement de vitesse.

8. Chaîne cinématique selon la revendication 7, dans laquelle la deuxième boîte de vitesses partielle (26) qui est associée au deuxième embrayage (38) comprend le rapport de vitesse (2) qui est utilisé le plus souvent lors du fonctionnement de conduite du véhicule.

9. Chaîne cinématique selon la revendication 8, dans laquelle le rapport de vitesse (2) utilisé le plus souvent est le rapport de vitesse le plus élevé.

10. Chaîne cinématique selon l'une quelconque des revendications 7 à 9, dans laquelle le moteur d'entraînement (12) est un moteur électrique, dans laquelle chacune des deux boîtes de vitesses partielles (24, 26) comprend exactement un rapport de marche avant et dans laquelle le rapport de marché avant (2) plus élevé est ajusté par la deuxième boîte de vitesses partielle (26).

11. Procédé de commande d'un agencement d'embrayage (34), en particulier d'un agencement d'embrayage (34) selon l'une quelconque des revendications 1 à 6, dans lequel l'agencement d'embrayage (34) comprend un premier et un deuxième embrayage (36, 38), lesquels sont réalisés sous la forme d'embrayages normalement ouverts, dans lequel le premier embrayage (36) peut être actionné au moyen d'un premier agencement d'actionneur (40) à partir d'une position ouverte jusqu'à une position fermée (s₂), et dans lequel le deuxième embrayage (38) peut être actionné au moyen d'un deuxième agencement d'actionneur (42) à partir d'une position ouverte jusqu'à une position fermée, et dans lequel seulement le deuxième embrayage (38) peut être bloqué dans la position fermée au moyen du dispositif de blocage (44), tandis que le premier embrayage (36) ne peut pas être bloqué dans la position fermée, de sorte que le premier agencement d'actionneur (40) doit être alimenté en énergie afin de maintenir le premier embrayage (36) dans la position fermée.

12. Procédé selon la revendication 11, dans lequel, au moins lorsque le deuxième embrayage (38) est bloqué dans la position de blocage, le premier embrayage (36) est contrôlé pour déterminer si le premier embrayage (36) est déplacé ou commandé dans le sens de fermeture, et dans lequel une mesure technique de sécurité est adoptée lorsque le premier embrayage (36) est déplacé ou commandé dans le sens de fermeture.

13. Procédé selon la revendication 11 ou 12, dans lequel les deux embrayages (36, 38) sont actionnés en coïncidence lors d'un changement de vitesse.

14. Procédé selon la revendication 13, dans lequel on contrôle si le deuxième embrayage (38) est, pendant l'actionnement en coïncidence du premier et du deuxième embrayage (36, 38), déplacé en direction de la position de blocage en raison d'une erreur, et dans lequel une mesure technique de sécurité est adoptée avant que le deuxième embrayage (38) ait été bloqué dans la position fermée.

15. Procédé selon la revendication 14, dans lequel la course de réglage du deuxième embrayage (38) à partir d'une position dans laquelle le deuxième embrayage (38) est fermé jusqu'à une position à partir de laquelle le deuxième embrayage (38) peut être pressé automatiquement dans la position de blocage, ou jusqu'à la position de blocage, est réalisée de manière suffisamment longue pour que, pendant le temps de réglage correspondant, la mesure technique de sécurité puisse être adoptée.
